# EUROPEAN PATENT APPLICATION

(11) **EP 2 128 469 A1**
(43) Date of publication of application: **02.12.2009**
(21) Application number: 08721598.4
(22) Date of filing: 07.03.2008
(51) Int. Cl.: F16D 3/205

(54) **SLIDING TRIPOD CONSTANT VELOCITY JOINT**

(30) Priority: 08.03.2007 JP 2007058898
(71) Applicant: JTEKT Corporation, Osaka-shi Osaka 542-8502 (JP)
(72) Inventor: ANDO, Yosei, Osaka-shi Osaka 542-8502 (JP); KASHIWAGI, Isashi, Osaka-shi Osaka 542-8502 (JP); ICHIKAWA, Kazuyuki, Osaka-shi Osaka 542-8502 (JP); SUGIURA, Hideki, Aichi-gun Aichi 480-1192 (JP)
(74) Representative: TBK-Patent
(86) International application number: PCT/JP2008/054180
(87) International publication number: WO 2008/111519

(57) **Abstract**

To provide a sliding-type tripod-shaped constant-velocity universal joint which can reduce induced thrust force by preventing the tangent-point back-surface side of rollers 70 from contacting with roller grooves 11 in the case where the rollers 70 and the roller grooves 11 make an angular contact at two locations.

An outer peripheral surface of the rollers 70 makes an angular contact with respect to the roller grooves 11 at two locations, and an inner peripheral surface of the rollers 70 is formed as a convex-shaped curve that is directed to the inner side in an axially cross section of the rollers 70. And, the rollers 70 are made swingable with respect to tripod-shaft portions 22.

## Description

### TECHNICAL FIELD

The present invention is one which relates to a sliding-type tripod-shaped constant-velocity universal joint.

### BACKGROUND ART

As for a conventional sliding-type tripod-shaped constant-velocity universal joint, there are those which are disclosed in Japanese Unexamined Patent Publication (KOKAI) Gazette No. 62-233, 522 and Japanese UtilityModel Publication (KOKAI) Gazette No. 3-121,228, for instance. These constant-velocity universal joints comprise a construction in which a plurality of needle rollers are interposed between a tripod-shaft portion and a roller, and the roller is inserted into a roller groove of an outer race. And, in Japanese Unexamined Patent Publication (KOKAI) Gazette No. 62-233,522 and Japanese Utility Model Publication (KOKAI) Gazette No. 3-121,228, a circular contact in which an outer peripheral surface of the roller contacts with the outer race's roller groove at one location, and an angular contact in which they contact at two locations are disclosed, as their contact states. And, it is set forth in them that induced thrust force that occurs in the outer race' s axially central direction is reduced more in the angular contact than in the circular contact. Note that this induced thrust force becomes the occurrence cause of vehicle-body vibrations and noises, and have an influence on vehicle's NVH (noise, vibration and harshness) performance.

Here, as set forth in the "Prior Art" section of Japanese Unexamined Patent Publication (KOKAI) Gazette No. 62-20,225, and as illustrated in Fig. 10 thereof, the center of tripod becomes such a state that it is eccentric with respect to the center of outer race when the joint angle of constant-velocity universal joint is not O deg. Therefore, any one of three tripod-shaft portions is put in such a state that it inclines with respect to roller grooves, namely, it undergoes so-called roll. And, the rollers set forth in Japanese Unexamined Patent Publication (KOKAI) Gazette No. 62-233,522 and Japanese Utility Model Publication (KOKAI) Gazette No. 3-121,228 incline being accompanied by the tripod-shaft portions' inclining action. That is, because the tripod-shaft portions roll, the rollers' axially central direction changes as follows: it becomes such a state that it coincides with the roller grooves' opening direction (i.e., the outer races' diametric direction) ; or it becomes such a state that it inclines with respect to the roller grooves' opening direction. Consequently, slip occurs between the rollers and the roller grooves; as a result, induced thrust force occurs in the outer races' axially central direction.

### DISCLOSURE OF THE INVENTION

### Assignment to be Solved by the Invention

By the way, in order that rollers roll in roller grooves securely, an outer peripheral surface of the rollers should be formed as a configuration that corresponds to the roller grooves. In order that the outer peripheral surface of the rollers and the roller grooves are formed as configurations that correspond to each other thusly, both of them are manufactured as follows. First of all, a complete finish processing for the roller grooves is carried out. And, the rollers are processed into a configuration that has a diametric adjustment allowance on the outer peripheral surface. Thereafter, the rollers' outer-peripheral-surface allowance is subjected to grinding processing so as to be adapted into the roller grooves that have undergone the finish processing already. On this occasion, as for the grinding face of grindstone that is used in the grinding processing for the rollers' outer peripheral surface, one with a fixed configuration is used. And, the rollers' outer peripheral surface is adapted into the roller grooves by adjusting the cutting magnitude in the rollers' diametric direction by means of the grindstone.

Since the adjustment grinding onto the rollers' outer peripheral surface is carried out thusly, the point at which the normal lines to the respective tangent planes between the rollers and roller grooves cross with each other when they make an angular contact at two locations, namely, an "angular central point," might be positioned at positions that deviate from the rollers' axial center. And, the angular central point is made so that it is positioned to deviate more toward the tangent-point side between the rollers and the roller grooves than at the rollers' axial center.

Here, the rollers are capable of sliding with respect to the tripod-shaft portions in the axial direction. Therefore, when the tripod-shaft portions roll with respect to the roller grooves, the rollers incline while being accompanied by the tripod-shaft portions' inclining action, and additionally move with respect to the tripod-shaft portions in the axial direction. That is, when viewing the rollers proper, the rollers turn virtually about the angular central point as the center, and then come to incline with respect to the outer race's diametric direction.

And, upon rotating a constant-velocity universal joint to transmit torque, a distance from the angular central point to the tangent-point side to the roller grooves within the rollers' outer peripheral surface (hereinafter, being referred to as an "angular tangent-point side) becomes shorter than a distance from the angular central point to the back-surface side (hereinafter, being referred to as a "tangent-point back-surface side") to the roller grooves within the rollers' outer peripheral surface.

Therefore, in the case of taking a state before the rollers incline as a datum, the displacement magnitude in a shaft' s diametric direction becomes great rather on the tangent-point back-surface side, compared with that displacement magnitude on the angular tangent-point side, when the rollers roll. Consequently, being caused by the rollers' rolling, there might be such a fear that the tangent-point back-surface side contacts with the roller grooves. And, by means of the tangent-point back-surface side's contacting with the roller grooves, induced thrust force enlarges.

Here, in the case of the circular contact inwhich they contact with each other at one location, the aforementioned problem that occurs in the angular contact does not occur. The reason for this will be explained briefly. To begin with, since the tangent point between the rollers and the roller groves is made at one location in the case of circular contact, the rollers' swing central point (a point that is equivalent to the "angular central point" in the foregoing) does not deviate from the rollers' axial center at all. Therefore, the rollers come to always swing with respect to the roller groves about a predetermined axially central position of the rollers axial center as the center. And, with respect to the rollers' swinging like this, the roller grooves are formed so that the roller grooves do not contact with the tangent-point back-surface side within the rollers' outer peripheral surface. Therefore, in the case of circular contact, the above-described problem in angular contact does not occur at all. That is, the above-described problematic issue is intrinsic to angular contact; and especially it is a problematic issue that occurs in the case where the angular central point deviates from the rollers' axial center.

The present invention is one which has been done in view of such circumstances, and it is an object to provide a sliding-type tripod-shaped constant-velocity universal joint which can reduce induced thrust force by preventing a tangent-point back-surface side from contacting with roller grooves in the case where rollers and the roller grooves make an angular contact at two locations.

### Means for Solving the Assignment

A sliding-type tripod-shaped constant-velocity universal joint according to the present invention is a sliding-type tripod-shaped constant-velocity universal joint that is equipped with:
an outer race being formed as a cylindrical configuration whose inner peripheral surface is provided with three roller grooves that extend in the axially central direction;
a tripod being equipped with a boss portion to be connected to a shaft, and three tripod-shaft portions being disposed extendedly from said boss portion to a diametrically outer side of said shaft respectively and being inserted into each of said roller grooves;
a plurality of needle rollers being put in place on an outer circumference of each of said tripod-shaft portions in the circumferential direction; and
three rollers being formed as an annular configuration, being supported to each of said tripod-shaft portions by way of said needle rollers rotatably around a tripod shaft and slidably in the axially central direction of said tripod-shaft portions, and additionally being inserted into each of said roller grooves rollably;
and is characterized in that:
an outer peripheral surface of said rollers makes an angular contact with respect to said roller grooves at two locations; and
an inner peripheral surface of said rollers is formed so that an axial cross section of said rollers has a configuration being convexed toward the inside, thereby making said rollers swingable with respect to said tripod-shaft portions.

That is, in accordance with the sliding-type tripod-shaped constant-velocity universal joint according to the present invention, since the rollers are made swingable with respect to the tripod-shaft portions, the rollers do not incline being accompanied by the inclining action of the tripod-shaft portions with respect to the roller grooves, even in a case where the tripod-shaft portions roll with respect to the roller grooves.

Here, it is effective to the following case: in the sliding-type tripod-shaped constant-velocity universal joint according to the present invention, an angular central point is defined as a point at which a normal line to a tangent plane between the rollers and the roller grooves and another normal line to another tangent plane between them cross each other in the two locations at which they make an angular contact; and that angular central point is positioned at a position that is deviated from the axial center of said rollers.

That is, in the case where the angular central point is positioned at a position that is deviated from the axial center of the rollers, there might be such a fear that the tangent-point back-surface side of the rollers contacts with the roller grooves, as described above. However, this is because of the fact that the rollers incline being accompanied by the inclining action of the tripod-shaft portions with respect to the roller grooves. On the contrary, in accordance with the present invention, even when the tripod-shaft portions are caused to incline with respect to the roller grooves by the rolling of the tripod-shaft portions, the rollers do not incline with respect to the roller grooves. Therefore, it is possible to prevent the tangent-point back-surface side of the rollers from coming in contact with the roller grooves, contact which is caused by the rolling of the tripod-shaft portions.

That is, in the case where the outer peripheral surface of the rollers and the roller grooves make an angular contact at two locations, it is possible to inhibit the occurrence of induced thrust force, occurrence which results from the tangent-point back-surface side of the rollers that comes in contact with the roller grooves. Therefore, in accordance with the sliding-type tripod-shaped constant-velocity universal joint according to the present invention, it is possible to effectively demonstrate the effect of reducing induced thrust force that results from making an angular contact at two locations.

Here, an inner peripheral surface of the rollers is formed so as to have an enlarging diameter as it comes from the axially central section and arrives at the end-surface sides when being viewed from the elongating direction of the roller grooves, enlarging diameter which enlarges in a corresponding manner to a maximum angle that the axial center of the tripod-shaft portions exhibits when it inclines with respect to the diametric direction of the outer race. By means of this, it is possible to prevent the rollers from swinging with respect to the roller grooves when being viewed from the elongating direction of the roller grooves.

Moreover, it is allowable that the rollers can be made swingable with respect to the roller grooves when being viewed from the perpendicular direction to the elongating direction of the roller grooves. That is, it becomes feasible that the rollers move being accompanied by the movements of the tripod-shaft portions when being viewed from the perpendicular direction to the elongating direction of the roller grooves. Here, the inner peripheral surface of the rollers is formed as a cross-sectional configuration that comprises a convex shape. Therefore, depending on its minimum inside diameter, it is also possible to absorb the inclination of the tripod-shaft portions with respect to the diametric direction of the outer race between the tripod-shaft portions and the rollers in the case of being viewed from the perpendicular direction to the elongating direction of the roller grooves, and thereby it is possible so as not to make the rollers swingable with respect to the roller grooves. However, in order to do like this, it is necessary to make the clearance between the rollers and the needle rollers greater.

However, by making the rollers swingable with respect to the roller grooves, it becomes allowable that, on such an occasion only that the tripod-shaft portions roll, the rollers can swing with respect to the tripod-shaft portions when being viewed from the perpendicular direction to the elongating direction of the roller grooves. That is, in the case where the tripod-shaft portions roll, it is allowable to provide a clearance between the rollers and the needle rollers to such an extent that the rollers do not incline being accompanied by the inclining action of the tripod-shaft portions.

For example, in a case where a joint angle is 5-10 deg. at the maximum, it is allowable that the inner peripheral surface of the rollers can be formed so that it becomes feasible that the axial center of the rollers inclines by 0.05-3.00 deg. at the maximum with respect to the axial center of the tripod-shaft portions. Thus, the angle for letting the rollers swing with respect to the tripod-shaft portions is a small angle compared with the joint angle. Therefore, it is possible to make the clearance to be formed between the rollers and the needle roller sufficiently small. That is, it is possible to make such an adverse affect as the rise of facing pressures at the contacts between the respective sections, rise which results from forming that clearance, small.

Here, it is allowable that a minimum inside diameter of the inner peripheral surface of the rollers can be 1.015 times or less of a length that is obtained by doubling a diameter of the needle rollers and then adding the doubled value to a diameter of the tripod-shaft portions. Preferably, it can be 1.007 times or less. By means of this, it is possible to securely make such an adverse affect as the rise of facing pressures at the contacts between the respective sections small.

Here, an angular central point is defined as a point at which the normal line to a tangent plane between the rollers and the roller grooves and another normal line to another tangent plane between them cross each other in the two locations at which they make an angular contact. Further, of the two locations at which they make an angular contact, a diametrically outer side of the shaft is defined as a first tangent point, and a diametrically inner side of the shaft is defined as a second tangent point.

And, it is allowable that, in a case where a plane that passes through the angular central point and then crosses the axial center of the rollers perpendicularly is designated as a datum plane, a first contact angle, which is an acute angle that a first line passing through the angular central point and the first tangent point makes with respect to the datum plane, can be set so that it differs from a second contact angle, which is an acute angle that a second line passing through the angular central point and the second tangent point makes with respect to said datum plane.

Here, in the foregoing, it has been set forth that it is possible to reduce induced thrust force by means of letting an outer peripheral surface of the rollers make an angular contact with the roller grooves at two locations. The reason for this is because of the following: namely, an outer-race axially-central component of a force that the outer race receives from the rollers at the first tangent point, and an outer-race axially-central component of the force that the outer race receives from the rollers at the second tangent point become opposite directions. That is, the outer-race axially-central forces are reduced as a whole, because the outer-race axially-central components at the two locations at which they come in contact with each other cancel mutually. Thus, theymake an angular contact at two locations, and thereby induced thrust force that occurs in the axially central direction of the outer race is reduced.

And, the outer-race axially-central component of the force that the outer race receives from the rollers at the first tangent point depends on the rotational angles of the constant-velocity universal joint. To be concrete, depending on the rotational angles of the constant-velocity universal joint, the magnitude differs, and its direction also becomes opposite. And, the change of the force at this first tangent point makes a one-cycle relationship for every one rotation of the constant-velocity universal joint. Further, the change of the force at that first tangent point also depends on the first contact angle. Moreover, regarding the outer-race axially-central component of the force that the outer race receives from the rollers at the second tangent point, it also depends on the rotational angles of the constant-velocity universal joint in the same manner as that at the first tangent point. Moreover, the change of the force at the second tangent point depends on the second contact angle. That is, by means of making the first contact angle and second contact angle different angles like the present invention, it is possible to more effectively reduce the induced thrust force in the axially central direction of the outer race as a whole.

In particular, it is allowable that the first contact angle can be 10 deg. or more, and that the second contact angle can be smaller than the first contact angle. Bymeans of this, it is possible to reduce the induced thrust force in the axially central direction of the outer race. More preferably, it is allowable that the first contact angle can be 12 deg. or more, and that the second contact angle can be smaller than the first contact angle. By means of this, it is possible to more securely reduce the induced thrust force. Much more preferably, it is allowable that the first contact angle can be 14 deg. or more, and that a ratio between the first contact angle and the second contact angle can be 1:0.5-0.85. By means of this, it is possible to much more securely reduce the induced thrust force.

Moreover, a range where the rollers and the roller grooves contact about the first tangent point as the center is defined as a first contact range; and another range where the rollers and the roller grooves contact about the second tangent point as the center is defined as a second contact range. On this occasion, it is allowable that the first contact range, and the second contact range can be set up so as to be an independent elliptical configuration, respectively, so that they do not overlap each other.

The axial cross section of the outer peripheral surface of the rollers is formed as an arc convex shape virtually, and the inner peripheral surface of the roller grooves are formed as an arc concave shape virtually. Therefore, such a state that each of the first contact range and second contact range turns into an elliptical configuration makes a range in which the contact range between the rollers and the roller grooves is the widest. By means of this, the facing pressures in the rollers and in the roller grooves (i.e., receiving forces per unit surface area) become small. As a result, it is possible to intend improvement on the durability of the rollers and roller grooves, and downsizing of the outer race.

Moreover, in a case of defining a range where the rollers and the roller grooves contact about the first tangent point as the center as a first contact range, and defining another range where the rollers and the roller grooves contact about the second tangent point as the center as a second contact range, it is allowable that at least one of the first contact range and the second contact range can be set up so as to be an independent elliptical configuration that is free from a deficient portion, which results from an end-surface part of the rollers. Of course, it is most allowable that the first contact range and the second contact range can be set up so as to be an elliptical configuration that is free from the deficient portion, respectively.

As aforesaid, such a state that each of the first contact range and second contact range turns into an elliptical configuration makes a range in which the contact range between the rollers and the roller grooves is the widest. And, since it is set up so that one of them turns into an elliptical configuration that is free from a deficient portion, which results from an end-surface part of the rollers, it is possible to put the contact areas in the widest state. By means of this, the facing pressures in the rollers and in the roller grooves (i.e., receiving forces per unit surface area) become small. As a result, it is possible to intend improvement on the durability of the rollers and roller grooves, and downsizing of the outer race.

### Effect of the Invention

In accordance with the sliding-type tripod-shaped constant-velocity universal joint according to the present invention, it is possible to reduce induced thrust force by inhibiting the tangent-point back-surface side of the rollers from coming in contact with the roller grooves in the case where the rollers and the roller grooves make an angular contact at two locations.

### BRIEF DESCRIPTION OF THE DRAWINGS

Fig. 1 illustrates a partial cross-sectional diagram of a constant-velocity universal joint 1 in the shaft's diametric direction (i.e., a partial cross-sectional diagram in which it is cut in the diametric direction of a shaft 2);
Fig. 2 illustrates a partial cross-sectional diagram of the constant-velocity universal joint 1 in the shaft's axial direction (i.e., a partial cross-sectional diagram in which it is cut in the axial direction of the shaft 2);
Fig. 3 illustrates a partial cross-sectional diagram of the constant-velocity universal joint 1 in the shaft's diametric direction (i.e., a partial cross-sectional diagram in which it is cut in the diametric direction of the shaft 2) in such an occasion when one of tripod-shaft portions 22 has rolled;
Fig. 4 illustrates how, of forces that rollers 70 receive from roller grooves 11, the force in the axial direction of an outer race 10 (i.e., the induced thrust force) is related with respect to the rotational angles of the constant-velocity universal joint 1 in such a case that a first contact angle "α1" is set at 15 deg. and a second contact angle "α2" is set at 15 deg.;
Fig. 5 illustrates ratios of the induced thrust forces that occur upon changing the first contact angle "α1" and second contact angle "α2" when the induced thrust force that occurs at the time of circular contact is taken as 1;
Fig. 6 illustrates an outer peripheral surface of the rollers 70 and the roller grooves 11 in such a case that they are viewed from the perpendicular direction to the elongating direction of the roller grooves 11, and is a schematic diagram for specifying contact ranges "Tsp1" and "Tsp2" between both of them; and
Fig. 7 is a diagram for showing whether the contact ranges "Tsp1" and "Tsp2" are an elliptical configurations, respectively, or not with respect to the first contact angle "α1" and second contact angle "α2."

### Explanation on Reference Numerals

1: Constant-velocity Universal Joint; 2: Shaft;
10: Outer Race; 11: Roller Grooves;
20: Tripod; 21: Boss Portion; 21a: Inner-periphery Spline
22: Tripod-shaft Portions; 22a: Ring Groove;
30: Inner Washer; 40: Needle Rollers; 50: Outer Washer;
60: Stopper Ring; 70: Rollers;
T1: First Tangent Point; T2: Second Tangent Point;
α1: First Contact Angle; α2: Second Contact Angle;
β: Joint Angle; y: Roll Angle;
O1 Angular Central Point; and X: Datum Plane

### Best Mode for Carrying Out the Invention

Next, the present invention will be explained in more detail while naming embodiment modes. Here, a sliding-type tripod-shaped constant-velocity universal joint 1 (hereinafter, being simply referred to as "a constant-velocity universal joint") will be explained while naming a case where it is used for connecting the power transmission shafts of vehicle as an example. For example, it is the case where it is used for the connector part between a shaft portion, which is connected to an output gear of differential apparatus (not shown), and a shaft 2, such as a drive shaft.

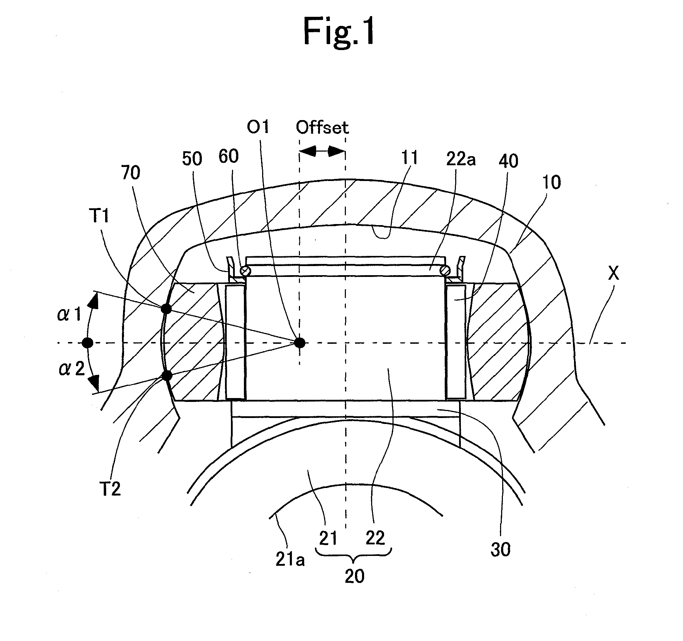

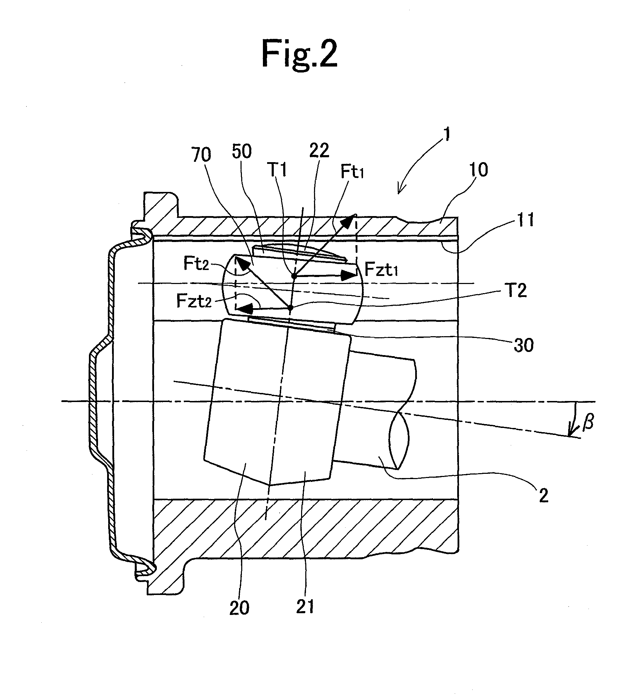

The constant-velocity universal joint 1 according to the present embodiment mode will be explained with reference to Fig. 1 and Fig. 2. Fig. 1 illustrates a partial cross-sectional diagram of the constant-velocity universal joint 1 in the shaft's diametric direction (i.e., a partial cross-sectional diagram in which it is cut in the diametric direction of the shaft 2) . Fig. 2 illustrates a partial cross-sectional diagram of the constant-velocity universal joint 1 in the shaft's axial direction (i.e., a partial cross-sectional diagram in which it is cut in the axial direction of the shaft 2). However, in Fig. 2, there is shown only one of rollers 70 that constitute the constant-velocity universal joint 1.

As illustrated in Fig. 1 and Fig. 2, this constant-velocity universal joint 1 is constituted of an outer race 10 to be connected to the output gear of differential apparatus, a tripod 20 to be connected to the shaft 2, an inner washer 30, a plurality of needle rollers 40, an outer washer 50, a stopper ring 60, and three rollers 70.

The outer race 10 is formed in a cylindrical shape (a bottomed cylindrical shape, for instance), and one of the opposite end sides is connected to an output gear of differential apparatus. And, in the inner peripheral surface of the cylindrical section of the outer race 10, a roller groove 11, which extends in the outer-race rotational axis direction (i.e., the right/left direction in Fig. 2), is formed in a quantity of three at equal intervals in the circumferential direction of the outer-race rotational axis. Here, these roller grooves 11 are formed as such a configuration that it is feasible for below-described rollers 70 to roll in the roller grooves 11 in the elongating direction. To be concrete, the roller grooves 11 take on a so-called Gothic arch shape that comprises two pieces of curvatures. Further, in the case of being viewed from the perpendicular direction to the elongating direction of the roller grooves 11, the roller grooves 11 are formed in such a configuration that it is feasible for the rollers 70 to swing. The expression, "it is feasible for the rollers 70 to swing in the case of being viewed from the perpendicular direction to the elongating direction of the roller grooves 11 (i.e., the state illustrated in Fig. 2)," means it is feasible for the rollers 70 to swing around the axes of the roller grooves 11 in the perpendicular direction to the elongating direction of them. Note that, in Fig. 1, only one of the roller grooves 11 is shown.

The tripod 20 is put in place inside the cylindrical section of the outer race 10. This tripod 20 is equipped with a boss portion 21, and three tripod-shaft portions 22. The boss portion 21 comprises a circular cylindrical shape, and an inner-periphery spline 21a is formed on the inner-peripheral side. This inner-periphery spline 21a is connected to an outer-periphery spline (not shown) on one of the opposite ends of the shaft 2 by means of fitting. That is, the boss portion 21 is put in place coaxially with the shaft 1.

The respective tripod-shaft portions 22 are formed so that they are present on the outer-peripheral side of the boss portion 21 in a manner extending toward the diametric-outer side of the axial center of the shaft 1 (i.e., the axial center of the tripod 2), and are formed at equal intervals (120-deg. intervals) in the circumferential direction of the boss portion 21. The tripod-shaft portions 22 comprise a circular columnar shape, and their columnarly elongating directions coincide with the diametric direction of the shaft 1. And, the leading end of each of the tripod-shaft portions 22 is inserted into each of the roller grooves 11 of the outer race 10. Moreover, on the leading-end side of each of the tripod-shaft portions 22, a ring groove 22a is formed over the entire circumference in the circumferential direction.

That is, with respect to the outer race 10, the tripod 20 is slidable in the axially central direction of the outer race 10, and becomes swingable with respect to the axial center of the outer race 10. By means of this, in such a state that the outer race 10 and shaft 2 are flexed (i.e., they make a joint angle), the outer race 10, and the shaft 2 become rotatable relatively to each other, and additionally they become movable relatively to each other in the axial directions.

An inner washer 30 comprises an annular shape, and is fitted around the root of each of the tripod-shaft portions 22. The needle rollers 40 comprise a needle-shaped roller, respectively. A plurality of these needle rollers 40 are put in place on the outer peripheral surface of each of the tripod-shaft portions 22 in the circumferential direction so that they become rollable with respect to the outer peripheral surface of each of the tripod-shaft portions 22. And, the needle rollers 40 are put in place so that they are laminated on the upper side of the inner washer 30 in Fig. 1. Specifically, the needle rollers 40 are put in place so that they are brought into contact with, of the parts of the inner washer 30, the leading-end-side surface of each of the tripod-shaft portions 22.

The outer washer 50 is present on the outer-peripheral side of each of the tripod-shaft portions 22, and is put in place so that it is laminated on the upper side of the needle rollers 40 in Fig. 1. The outer washer 50 has a role of keeping the needle rollers from coming off. And, the outer washer 50 is made so as not to drop off from each of the tripod-shaft portions 22 by means of the stopper ring 60 that is locked to the ring groove 22a of each of the tripod-shaft portions 22. That is, the needle rollers 40 are put in place so that they are held between the inner washer 30 and the outer washer 50.

The rollers 70 comprise an annular shape. Each of these rollers 70 is supported to each of the tripod-shaft portions 22 by way of the needle rollers 40 rotatably around the axial center of each of the tripod-shaft portions 22, and slidably in the axially central direction of each of the tripod-shaft portions 22. Further, the rollers 70 are made swingable with respect to each of the tripod-shaft portions 70. Moreover, the respective rollers 70 are inserted into the respective roller grooves 11 rollably.

The axial cross section of the outer peripheral surface of these rollers 70 is formed as an arc convex shape toward the diametrically outer side of the rollers 70. Concretely, of the sections of the outer peripheral surface of the rollers 70, the substantially central section in the axial direction of the rollers 70 is formed so as to protrude most to the diametrically outer side. That is, the outer peripheral surface of the rollers 70 reduces diametrically as it comes from the axially central section to the opposite end sides.

And, the curvature radius of this arc convex shape comprises a single curvature radius, and is smaller than the two curvature radii of the roller grooves 11. That is, the outer peripheral surface of the rollers 70 are made so that it makes an angular contact at two locations with respect to the roller grooves 11. That is, the outer peripheral surface of the rollers 70 and the roller grooves 11 contact with each other at a first tangential point "T1" that is positioned on a diametrically outer side of the shaft 2, and at a second tangential point "T2" that is positioned on a diametrically inner side of the shaft 2.

Here, a processing method for the outer peripheral surface of the rollers 70 is carried out as follows. The rollers 70 are processes into a configuration that has a diametric adjustment allowance on the outer peripheral surface. Thereafter, the outer-peripheral-surface allowance of the rollers 70 is subjected to grinding processing so as to be adapted into the roller grooves 11 of the outer race 11. On this occasion, as for the grinding face of grindstone that is used in the grinding processing for the outer peripheral surface of the rollers 70, one with an arc concave shape, which comprises a constant curvature radius, is used. And, the outer peripheral surface of the rollers 70 is adapted into the roller grooves by adjusting the cutting magnitude in the diametric direction of the rollers 70 by means of this grindstone.

Since the adjustment grinding onto the outer peripheral surface of the rollers 70 is thus carried out, the curvature center "O1" is positioned at a position that is deviated (or offset) from the axial center of the rollers 70. And, the curvature radius of the outer peripheral surface of the rollers 70 is smaller than the maximum outside radius of the rollers 70. That is, the curvature center "O1" in a predetermined outer peripheral surface of the rollers 70 is deviated from the axial center of the rollers 70 to that predetermined-outer-peripheral-surface side. Here, at the two locations where the rollers 70 and the roller grooves 11 make an angular contact, this curvature center "O1" makes a point at which the normal lines to the respective tangent planes between them cross with each other (hereinafter, being referred to as an "angular central point 'O1'"). Moreover, a plane that passes the angular central point "O1" and then crosses with the axial center of each of the rollers 70 perpendicularly is designated as a datum plane "X." On this occasion, an acute angle that a first line passing through the angular central point "O1" and first tangent point "T1" makes with respect to the datum plane "X" will be referred to as a first contact angle "α1." Moreover, another acute angle that a second line passing through the angular central point "O1" and second tangent point "T2" makes with respect to the datum plane "X" will be referred to as a second contact angle "α2."

Moreover, the axial cross section of the inner peripheral surface of the rollers 70 is formed in a convex-shaped curve toward the diametrically inner side of the rollers 70, namely, in an arc convex shape, for instance. Concretely, of the sections of the inner peripheral surface of the rollers 70, the axially central section of the rollers 70 is formed so as to protrude most to the diametrically inner side. That is, the axially inner central section of the inner peripheral surface of the rollers 70 enlarges diametrically as it comes from the axially central section to both of the opposite end sides. Further, of the sections of the inner peripheral surface of the rollers 70, each of the sections that are present off from the axially central section to the opposite end sides is formed so as to have an enlarging diameter, which enlarges in a corresponding manner to a maximum angle that the axial center of each of the tripod-shaft portions 22 exhibits when it inclines with respect to the diametric direction of the outer race 10, as it comes from the axially central section and then arrives at each of the opposite end sides when being viewed from the elongating direction of each of the roller grooves 11. The opposite end sides of the inner peripheral surface of the roller 70 are thus formed in a tapered shape that enlarges linearly in accord with the aforementionedmaximum angle.

By means of the fact that the inner peripheral surface of the rollers 70 is thus formed, upon transmitting torque in such a state that the joint angle is 0 deg. (or the rotary axis of the outer race 10 and the rotary axis of the tripod 20 coincide with each other), only the axially central section of the inner peripheral surface of the rollers 70 comes in contact with each of the needle rollers 40. Moreover, as the joint angle becomes greater, the coming-in-contact section between the inner peripheral surface of the rollers 70 and each of the needle rollers 40 moves to one of the axially opposite end sides of each of the rollers 70. In the case where the axial center of each of the tripod-shaft portions 22 inclines with respect to the diametric direction of the outer race 10 maximally in the circumferential direction of the outer race 10, the tapered section at one of the opposite end sides of the inner peripheral surface of each of the rollers 70, and each of the needle rollers 40 make a linear contact. By means of this, the following are avoided, namely, one of the opposite ends of each of the needle rollers 40 makes a point contact to the inner peripheral surface of each of the rollers 70 and then the facing pressure heightens extremely.

And, the minimum inside diameter of the inner peripheral surface of the rollers 70 is set greater than a length, which is obtained by doubling the diameter of the needle rollers 40 and then adding the doubled value to the diameter of the tripod-shaft portions 22. Here, the minimum inside diameter of the inner peripheral surface of the rollers 70 is set greater than the length that is obtained by doubling the diameter of the needle rollers 40 and then adding the doubled value to the diameter of the tripod-shaft portions 22, namely, it is set to fall in a range of 1.015 times or less of the length. By setting it within this range, the rollers 70 can swing with respect to the tripod-shaft portions 22 when being viewed from the axially central direction of the tripod 20. Further, when being viewed from the perpendicular direction to the elongating direction of each of the roller grooves 11 (i.e., the state shown in Fig. 2), the rollers 70 can swing with respect to the roller grooves 11 being accompanied by the swing of the tripod-shaft portions 22.

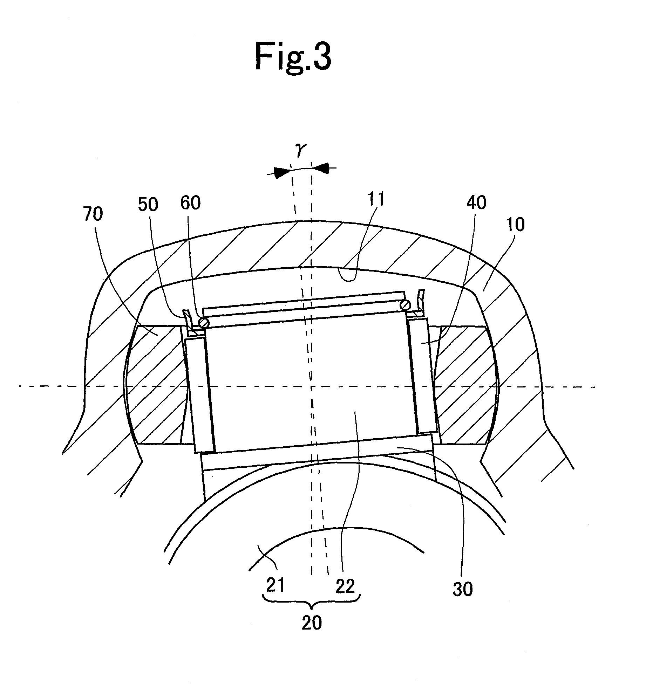

Next, the operations of the constant-velocityuniversal joint 1 that comprises the above-described construction will be explained with reference to Fig. 2 and Fig. 3. Here, Fig. 3 illustrates a partial cross-sectional diagram of the constant-velocity universal joint 1 in the shaft's diametric direction (i.e., a partial cross-sectional diagram in which it is cut in the diametric direction of the shaft 2) in such an occasion when one of the tripod-shaft portions 22 has rolled.

As illustrated in Fig. 3, because of the following: the cross-sectional configuration of the inner peripheral surface of each of the rollers 70 comprises a convex-shaped curve toward the diametrically inner side; and a clearance is formed between the minimum inside diameter of the inner peripheral surface of each of the rollers 70 and each of the needle rollers 40; the rollers 70 can swing with respect to the tripod-shaft portions 22. However, since that clearance is not one which is big too much; in the case of being viewed from the axially central direction of the outer race 10, the rollers 70 do not incline even when the tripod-shaft portions 20 roll, as shown in Fig. 3; but, in the case of being viewed from the perpendicular direction to the elongating direction of each of the roller grooves 11, the rollers 70 come to incline with respect to the roller grooves 11 being accompanied by the tripod-shaft portions 22 when the joint angle becomes large, as illustrated in Fig. 2. Note that, in Fig. 2 and Fig. 3, the inclination of the rollers 70 is expressed more exaggeratedly than the actuality is for the purpose of explanation.

That is, as illustrated in Fig. 3, in the case of being viewed from the axially central direction of the outer race 10, the rollers 70 do not incline with respect to the roller grooves 11 when the tripod-shaft portions 22 roll with respect to the roller grooves 11. To be concrete, as far as being up to such a state that the acute angle, which the axial center of the tripod-shaft portions 22 and the axial center of the rollers 70 make, becomes "γ," the rollers 70 do not incline with respect to the roller grooves 11. The thus made acute angle "γ" is one which is equivalent to the so-called roll angle of the tripod-shaft portions 22, and depends on the joint angles "β" of the constant-velocity universal joint 1.

An ordinary service region of the joint angle "β" at the time of usual travelling of vehicle is 4-10 deg. In order to reduce induced thrust force in this range, it is allowable to set the maximum angle to which the axial center of the rollers 70 can incline with respect to the axial center of the tripod-shaft portions 22 to 0.1 deg. or more. Further, in order to reduce induced thrust force in the entire range over 4-10 deg., the ordinary service region of the joint angle "β," it is allowable to set the aforementioned maximum angle to 0.5 deg. or more. That is, when setting up the aforementioned maximum angle within a range of 0.1-0.5 deg., it is achievable to reduce induced thrust force within 4-10 deg., the ordinary service region of the joint angle "β."

Moreover, in order to reduce induced thrust force in a range of much wider joint angles "β," it is allowable to set the aforementioned maximum angle to 0.7 deg. or more, further to 1.5 deg. ormore. That is, as far as setting up the aforementionedmaximum angle in a range of 0.7-1.5 deg., it is achievable to reduce induced thrust force in a range of much wider joint angles "β." In order to reduce induced thrust force in the entire range up to the maximum joint angle, it is allowable to set the aforementioned maximum angle to 2.00 deg. or more, further to 3.00 deg. or more. That is, when setting up the aforementioned maximum angle in a range of 2.00-3.00 deg., it is achievable to reduce induced thrust force in the entire range up to the maximum joint angle. However, when the axial center of the rollers 70 incline greatly with respect to the tripod-shaft portions 22, since the diametric clearance between the needle rollers 40 and the rollers 70 narrows down so that there might arise such a fear that no smooth rotation is obtainable, the aforementioned maximum angle should be set up while keeping a good balance between it and a targeted induced-thrust-force reduction effect in mind.

That is, since the inner peripheral surface of the rollers 70 and the roller grooves 11 make an angular contact at two locations, the rollers 70 do not move being accompanied by the roll of the tripod-shaft portions 22. Therefore, it is possible to prevent the occurrence of induced thrust force that results from, of the sections of the outer peripheral surface of the rollers 70, the tangent-point back-surface side (i.e., the right side in Fig. 3) that contacts with the roller grooves 11.

On the other hand, in the case of being viewed from the perpendicular direction to the elongating direction of the roller grooves 11, the rollers 70 come to incline with respect to the roller grooves 11 being accompanied by the inclining action of the tripod-shaft portions 22 with respect to the roller grooves 11, as illustrated in Fig. 2. That is, it is allowable that the clearance between the minimum inside diameter of the inner peripheral surface of the rollers 70 and the needle rollers 40 can be such an extent of clearance that disables the rollers 70 to incline with respect to the roller grooves 11 even when the tripod-shaft portions 22 roll with respect to the roller grooves 11 in the case of being viewed from the axially central direction of the outer race 10, as shown in Fig. 3. That is, it is possible to make the adverse affect small, adverse effect which results from forming that clearance.

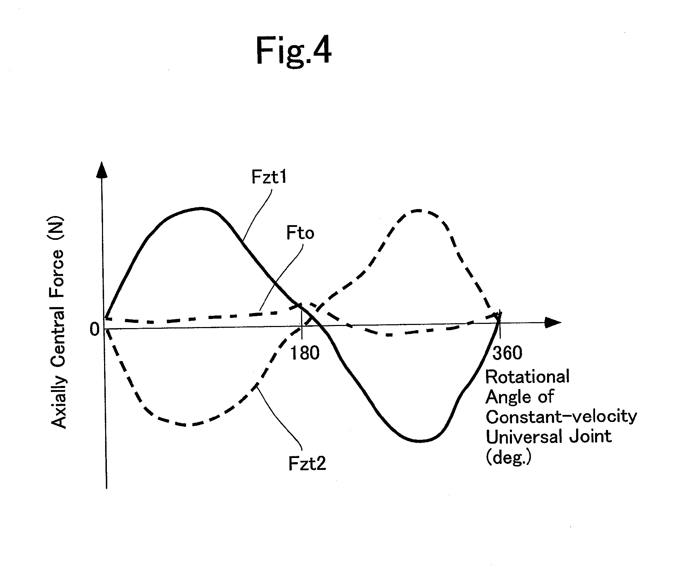

Next, the force that the roller grooves 11 of the outer race 10 receive from the rollers 70 when the constant-velocity universal joint 1 rotates will be explained with reference to Fig. 2 and Fig. 4. Here, Fig. 4 illustrates how, of forces that the rollers 70 receive from the roller grooves 11, the force in the axial direction of the outer race 10 (i.e., the induced thrust force) is related with respect to the rotational angles of the constant-velocity universal joint 1 in such a case that both of the first contact angle "α1" and second contact angle "α2" are set at 15 deg.

Here, for the purpose of making the explanation easy, the predetermined state as illustrate in Fig. 2, namely, the following cases will be explained: the joint angle "β" of the constant-velocity universal joint 1 (i.e., the acute angle that the axial center of the outer race 10 and the axial center of the shaft 2 make) is a predetermined value; and the rotational angle of the outer race 10 is a predetermined angle.

At the first tangent point "T1," the roller grooves 70 receive a force "Ft1" from the rollers 70, force "Ft1" which is directed to the opening side of the outer race 10 and to the diametrically outer side of the outer race 10. That is, of that force "Ft1," the force' s component in the axially central direction of the outer race 10 becomes "Fzt1." This axially-central-force component "Fzt1" becomes the "induced thrust force at the first tangent point 'T1'" that occurs between the outer race 10 and the rollers 70. Moreover, at the second tangent point "T2," the roller grooves 70 receive a force "Ft2" from the rollers 70, force "Ft2" which is directed to the bottom side of the outer race 10 and to the diametrically outer side of the outer race 10. That is, of that force "Ft2," the force's component in the axially central direction of the outer race 10 becomes "Fzt2." This axially-central-force component "Fzt2" becomes the "induced thrust force at the second tangent point 'T2'" that occurs between the outer race 10 and the rollers 70.

That is, the induced thrust force that occurs between the entire outer race 10 and the rollers 70 becomes a summed force of the axially-central-force component "Fzt1" at the first tangent point "T1" and the axially-central-force component "Fzt2" at the second tangent point "T2." Here, the axially-central-force component "Fzt1" at the first tangent point "T1," and the axially-central-force component "Fzt2" at the second tangent point "T2" exert their forces in the opposite directions to each other. That is, both of the axially-central-force components "Fzt1" and "Fzt2" make a relationship in which they cancel mutually. Therefore, the induced thrust force that occurs between the entire outer race 10 and the rollers 70 becomes small, compared with both of the axially-central-force components "Fzt1" and "Fzt2." To put it differently, it is possible to reduce the induced thrust force by the roller grooves 11 and rollers 70 that make an angular contact at two locations.

However, the axially-central-force component "Fzt1" at the first tangent point "T1," and the axially-central-force component "Fzt2" at the second tangent point "T2" depend on the rotational angles of the constant-velocity universal joint 1. That is, the axially-central-force components "Fzt1" and "Fzt2" at both of the first tangent point "T1" and second tangent point "T2" with respect to the rotational angles of the constant-velocity universal joint 1 become those such as illustrated in Fig. 4. As shown in Fig. 4, any one of the axially-central-force components "Fzt1" and "Fzt2" exhibits such a behavior that makes one cycle when the constant-velocity joint 1 turns around once (360 deg.). And, both of the axially-central-force components "Fzt1" and "Fzt2" make a relationship in which they become opposite phases to each other. And, the induced thrust force "Fto" that occurs in the entire outer race 10 undergoes a transition at around zero virtually, regardless of the rotational angles of the constant-velocity universal joint 1. Thus, it is possible to make the induced thrust force extremely small, and additionally it is possible to make it virtually constant with respect to the rotational angles of the constant-velocity universal joint 1.

But, this induced thrust force "Fto" fluctuates when the first contact angle "α1" and second contact angle "α2" fluctuate. Hence, in a case where the first contact angle "α1" and second contact angle "α2" were altered appropriately, an analysis was carried out regarding the induced thrust force "Fto" while setting the joint angle at 10 deg., changing the first contact angle "α1" to 6 deg., 8 deg., 10 deg., 12 deg., 14 deg. and 16 deg., and changing the second contact angle "α2" with respect to the respective first contact angles "α1" appropriately.

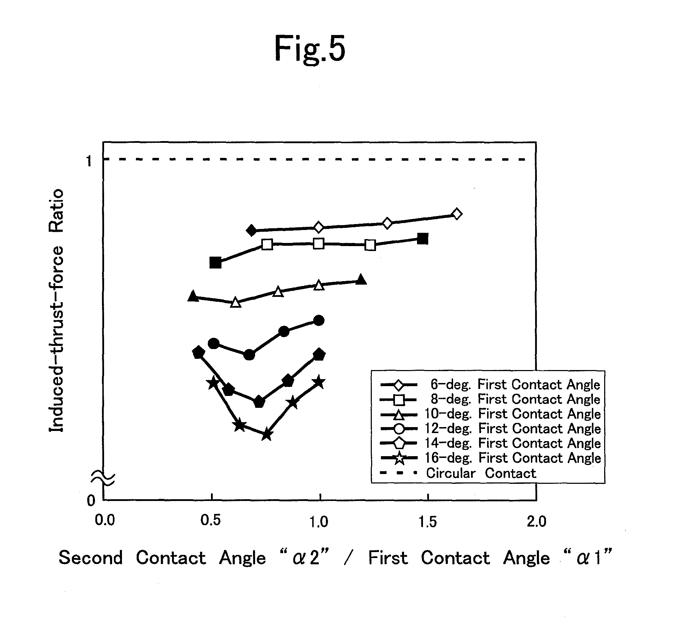

The results of this analysis are illustrated in Fig. 5. Fig. 5 shows ratios of the induced thrust forces that occur upon changing the first contact angle "α1" and second contact angle "α2" when the induced thrust force that occurs at the time of circular contact is taken as 1. The horizontal axis of Fig. 5 is labeled the "ratio of second contact angle 'α2' to first contact angle 'α1' (α2/ α1)." Moreover, in Fig. 5, the blank symbols specify that a contact range "Tsp1" between the rollers 70 and the roller grooves 11 about the first tangent point T1 as the center (i.e., the first contact range), and a contact range "Tsp2" between the rollers 70 and the roller grooves 11 about the second tangent point T2 as the center (i.e., the second contact range), turn into an elliptic shape, respectively. On the other hand, in Fig. 5, the solid symbols specify either that the first contact range "Tsp1" and the second contact range "Tsp2" overlap each other so that each of them does not turn into an independent elliptic shape; or that the first contact range "Tsp1" or the second contact range "Tsp2" turns into a non-elliptic shape that has a deficient portion resulting from one of the opposite-end-surface parts of the rollers 70.

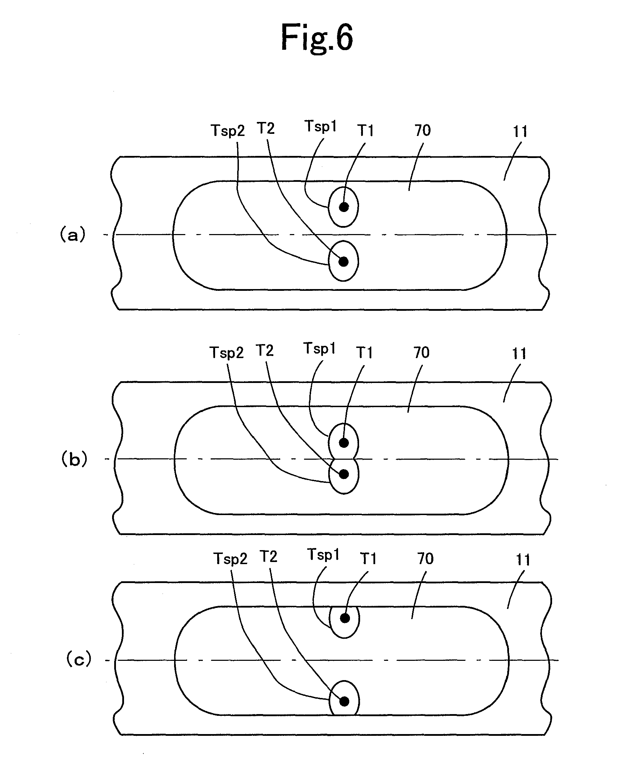

First of all, the configurations of the first contact range "Tsp1" and second contact range "Tsp2" will be explained with reference to Fig. 6. Fig. 6 illustrates an outer peripheral surface of the rollers 70 and the roller grooves 11 in such a case that they are viewed from the perpendicular direction to the elongating direction of the roller grooves 11, and is a schematic diagram for specifying the contact ranges "Tsp1" and "Tsp2" between both of them. Fig 6(a) shows a case where the first contact range "Tsp1" and the second contact range "Tsp2" become independent of each other and accordingly they turn into an elliptic shape that is free from any deficient portion resulting from one of the opposite-end-surface parts of the rollers 70. Fig 6 (b) shows a case where the first contact range "Tsp1 and the second contact range "Tsp2" overlap each other and accordingly each of them is not an independent elliptic shape. Fig 6(c) shows a case where the first contact range "Tsp1" and the second contact range "Tsp2" are a non-elliptic shape, respectively, that has a deficient portion resulting from one of the opposite-end-surface parts of the rollers 70.

As illustrated in Fig. 5, although the larger the first contact angle "α1" is the more the induced thrust force tends to be reduced, it is not desirable in view of durability because the facing pressures at the tangent points T1 and T2 heighten when the first contact angle "α1" is too large. In order to reduce the induced thrust force while securing durability, it is allowable to set the first contact angle "α1" to from 10 deg. or more to less than 14 deg., more suitably from 10 deg. or more to less than 12 deg.

In a case where the first contact angle "α1" was 16 deg., the induced thrust force was the smallest when the ratio between the first contact angle "α1" and the second contact angle "α2" was 1:0.76, and the induced thrust force became small sufficiently when it fell in a range of 1:0.60-0.88. However, in the case where the first contact angle "α1" was 16 deg., the contact ranges "Tsp1" and "Tsp2" turned into a non-elliptical shape that had a deficient portion, respectively. In a case where the first contact angle "α 1" was 14 deg., the induced thrust force was the smallest when the ratio between the first contact angle "α1" and the second contact angle "α2" was 1:0.72, and the induced thrust force became small sufficiently when it fell in a range of 1:0.50-0.85. However, in the case where the first contact angle "α1" was 14 deg., the contact ranges "Tsp1" and "Tsp2" turned into a non-elliptical shape that had a deficient portion, respectively. In a case where the first contact angle "α1" was 12 deg., the induced thrust force was the smallest when the ratio between the first contact angle *"*α1" and the second contact angle "α2" was 1:0.67, and the induced thrust force became small sufficiently when it fell in a range of 1:0.50-0.85. However, in the case where the first contact angle "α1" was 12 deg., the contact ranges "Tsp1" and "Tsp2" turned into a non-elliptical shape that had a deficient portion, respectively.

On the contrary, in the cases where the first contact angle "α1" was 10 deg. or less, the induced thrust force did not change so much even when changing the ratio between the first contact angle "α1" and the second contact angle "α2." Specifically, in the cases where the first contact angle "α1" was 10 deg. or less, the induced thrust force is small compared with the cases where the first contact angle "α1" was 12 deg. or more. However, in a case where the first contact angle "α1" was 10 deg., although slightly, the induced thrust force was reduced when setting the first contact angle "α1" larger than the second contact angle "α2."

To be concrete, in the case where the first contact angle "α1" was 10 deg., the induced thrust force was the smallest when the ratio between the first contact angle "α1" and the second contact angle "α2" was 1:0.61, and the induced thrust force became small slightly when it fell in a range of 1:0.61-1.00. However, in the case where the first contact angle "α1" was 10 deg., the contact ranges "Tsp1" and "Tsp2" turned into an elliptical shape, respectively when the ratio between the first contact angle "α1" and the second contact angle "α2" was 1:0.61-1.00. But, the contact ranges "Tsp1" and "Tsp2" at the time of the ratio between the first contact angle "α1" and the second contact angle "α2" being 1:0.42 overlapped each other, and each of them was not an independent elliptic shape. Moreover, the contact ranges "Tsp1" and "Tsp2" at the time of the ratio between the first contact angle "α1" and the second contact angle "α2" being 1:1.20 turned into a non-elliptical shape that had a deficient portion, respectively.

Moreover, in a case where the first contact angle "α1" was 8 deg., the induced thrust force was the smallest when the ratio between the first contact angle "α1" and the second contact angle "α2" was 1:0.52. However, in the case where the first contact angle "α1" was 8 deg., the contact ranges "Tsp1 and "Tsp2" turned into an elliptical shape, respectively, when the ratio between the first contact angle "α1" and the second contact angle "α2" was 1:0.76-1.24. But, the contact ranges "Tsp1" and "Tsp2" at the time of the ratio between the first contact angle "α1" and the second contact angle "α2" being 1:0.52 overlapped each other, and each of them was not an independent elliptic shape. Moreover, the contact ranges "Tsp1" and "Tsp2" at the time of the ratio between the first contact angle "α1" and the second contact angle "α2" being 1:1.48 turned into a non-elliptical shape that had a deficient portion, respectively.

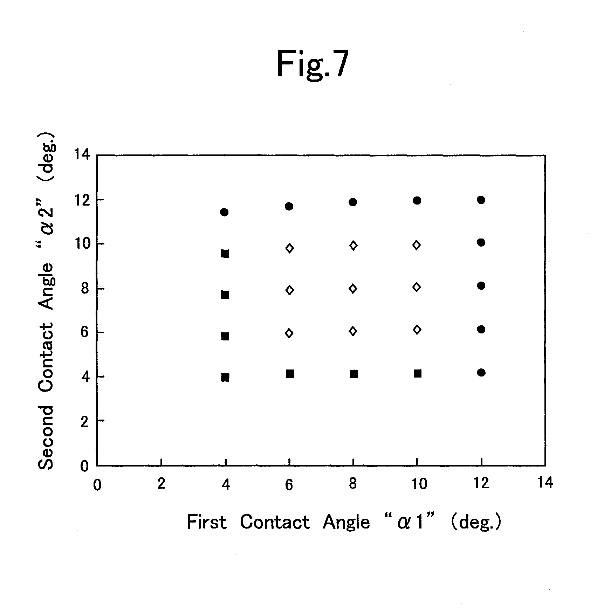

Here, results of focusing onwhether the contact ranges "Tsp1" and "Tsp2" are an elliptical shape, respectively, or not are illustrated in Fig. 7. Fig. 7 is a diagram for showing whether the contact ranges "Tsp1 and "Tsp2" were an elliptical shape, respectively, or not with respect to the first contact angle "α 1" and second contact angle "α2." In Fig. 7, the blank diamond symbols specify that the first contact range "Tsp1," and the second "Tsp2" turned into an elliptical shape, respectively. In Fig. 7, the solid square symbols specify that the first contact range "Tsp1," and the second "Tsp2" overlapped each other so that each of them did not turn into an independent elliptical shape. In Fig. 7, the solid circle symbols specify that the first contact range "Tsp1," and the second "Tsp2" turned into a non-elliptical shape that had a deficient portion, which resulted from one of the opposite-end-surface parts of the rollers 70, respectively.

As illustrated in Fig. 7, a range where the contact areas "TSP1" and "Tsp2" turned securely into an elliptical shape, respectively, was a range where the first contact angle "α1" fell in a range of 6-10 deg. and the second contact angle "α2" fell in a range of 6-10 deg. And, the contact ranges "Tsp1" and "Tsp2" overlapped each other so that each of them did not turn into an independent elliptical shape in a case where the first contact angle "α1" was 4 deg. or less and then the second contact angle "α2" was 10 deg. or less, and in a case where the second contact angle "α 2" was 4 deg. or less and then the first contact angle "α1" was 10 deg. or less. Moreover, the first contact area "Tsp1" turned into an elliptical shape that had a deficient portion in a case where the first contact angle "α1" became 12 deg. or more. The second contact area "Tsp2" turned into an elliptical shape that had a deficient portion in a case where the first contact angle "α2" became 12 deg. or more.

Note that the greater the overlapping areas between the first contact area "Tsp1" and the second contact area "Tsp2" at the respective points with the solid square symbols in Fig. 7 became the closer the solid square symbols approach the lower left end of the graph; and that the narrower the overlapping areas became the solid square symbols get away from the lower left end of the graph. For examples, in a case where the first contact angle "α1" was 10 deg. and the second contact angle "α2" was 4 deg., the overlapping area between the first contact range "Tsp1" and the second contact range "Tsp2" was smaller than the overlapping area in a case where both of the first contact angle "α1" and second contact angle "α 2" were 4 deg., and the summed area of the contact ranges "Tsp1" and "Tsp2" was great relatively. Similarly, the greater the overlapping areas between the first contact area "Tsp1" and the second contact area "Tsp2" at the respective points with the solid circle symbols in Fig. 7 became the closer the solid circle symbols approach the upper right end of the graph; and that the narrower the overlapping areas became the solid circle symbols get away from the upper right end of the graph. Therefore, it is not required that the first contact angle "α1" and the second contact angle "α2" be set up within the range that is pertinent to the blank diamond symbols, but it is allowable to set up the first contact angle "α1" and the second contact angle "α2" so as to satisfy required durability in the relationship between them and torque capacity.

From these results, it is possible to derive the following. First of all, when the facing pressures at the tangent points are not considered, the greater the first contact angle "α1" is the more allowable it is. Moreover, it is allowable that the first contact angle "α1" can be greater than the second contact angle "α2" is. The reason for this is as follows. Specifically, in Fig. 2, when the shaft 2 takes on the joint angle "β" with respect to the rotary axis of the outer race 10, the tripod-shaft portion 22 inclines by the magnitude of the joint angle "β" in the diametric direction of the rotary axis of the outer race 10, and then an angle that "Ft1" and "Fzt1" make becomes smaller than another angle that "Ft2" and "Fzt2" make. Consequently, in the case of being "α1" = "α2," it becomes "Fzt1" > "Fzt2," and the induced thrust force enlarges by such an extent that "Fzt1" is greater than "Fzt2" is. Here, when being set so as to be "α1" > "α2", "Ft1" becomes small, and "Ft2" becomes great, compared with the case of being "α1" - "α2." Therefore, the sizes of "Fzt1" and "Fzt2" approach being equal to each other, and thereby the induced thrust force becomes small.

In particular, in the cases where the first contact angle "α1" is 10 deg. or more, it is allowable that the first contact angle "α1" can be greater than the second contact angle "α2" is. And, in the cases where the first contact angle "α1" is 14 deg. or more, it is possible to reduce the induced thrust force when the ratio between the first contact angle "α1" and the second contact angle "α2" is set to 1:0.50-0.85. However, considering the facing pressures at the contact points, it is more allowable so as to set the ratio so that the contact ranges "Tsp1" and "Tsp2" turn into an elliptical shape, respectively. In this instance, the range that has been explained using Fig. 7 becomes favorable. Therefore, it is allowable to select those that satisfy the requirements for each of the induced thrust force and facing pressures appropriately.

Note that, in the aforementioned embodiment mode, although the roller grooves 11 are formed as a Gothic arch shape, respectively, and although the cross-sectional configuration of the outer peripheral surface of the respective rollers 70 is formed as a single arc convex shape, they are not limited to these. Specifically, it is allowable that the configurations of both of them can be set so that they make an angular contact at two locations; and accordingly it is even allowable to form the cross-sectional configuration of the respective roller grooves 11 as a single arc concave shape and to form the cross-sectional configuration of the outer peripheral surface of the respective rollers 70 as a composite arc configuration.

## Claims

1. A sliding-type tripod-shaped constant-velocity universal joint being equipped with:
an outer race being formed as a cylindrical configuration whose inner peripheral surface is provided with three roller grooves that extend in the axially central direction;
a tripod being equipped with a boss portion to be connected to a shaft, and three tripod-shaft portions being disposed extendedly from said boss portion to a diametrically outer side of said shaft respectively and being inserted into each of said roller grooves;
a plurality of needle rollers being put in place on an outer circumference of each of said tripod-shaft portions in the circumferential direction; and
three rollers being formed as an annular configuration, being supported to each of said tripod-shaft portions by way of said needle rollers rotatably around a tripod shaft and slidably in the axially central direction of said tripod-shaft portions, and additionally being inserted into each of said roller grooves rollably;
the sliding-type tripod-shaped constant-velocity universal joint being **characterized in that**:
an outer peripheral surface of said rollers makes an angular contact with respect to said roller grooves at two locations; and
an inner peripheral surface of said rollers is formed so that an axial cross section of said rollers has a configuration being convexed toward the inside, thereby making said rollers swingable with respect to said tripod-shaft portions.

2. The sliding-type tripod-shaped constant-velocity universal joint as set forth in claim 1, wherein:
an angular central point is defined as a point at which a normal line to a tangent plane between said rollers and said roller grooves and another normal line to another tangent plane between them cross each other in said two locations at which theymake an angular contact; and
said angular central point is positioned at a position that is deviated from the axial center of said rollers.

3. The sliding-type tripod-shaped constant-velocity universal joint as set forth in claim 1 or 2, wherein an inner peripheral surface of said rollers is formed so as to have an enlarging diameter as it comes from the axially central section and arrives at the end-surface sides when being viewed from the elongating direction of said roller grooves, enlarging diameter which enlarges in a corresponding manner to a maximum angle that the axial center of said tripod-shaft portions exhibits when it inclines with respect to the diametric direction of said outer race.

4. The sliding-type tripod-shaped constant-velocity universal joint as set forth in either of claims 1-3, wherein said rollers are made swingable with respect to said roller grooves when being viewed from the perpendicular direction to the elongating direction of said roller grooves.

5. The sliding-type tripod-shaped constant-velocity universal joint as set forth in claim 4, wherein a minimum inside diameter of the inner peripheral surface of said rollers has is 1.015 times or less of a length that is obtained by doubling a diameter of said needle rollers and then adding the doubled value to a diameter of said tripod-shaft portions.

6. The sliding-type tripod-shaped constant-velocity universal joint as set forth in either one of claims 1-5, wherein:
when an angular central point is defined as a point at which the normal line to a tangent plane between said rollers and said roller grooves and another normal line to another tangent plane between them cross each other in said two locations at which they make an angular contact;
of said two locations at which they make an angular contact, a diametrically outer side of said shaft is defined as a first tangent point, and a diametrically inner side of said shaft is defined as a second tangent point; and
a plane that passes through said angular central point and then crosses the axial center of said rollers perpendicularly is designated as a datum plane;
a first contact angle, which is an acute angle that a first line passing through said angular central point and said first tangent point makes with respect to said datum plane, differs from a second contact angle, which is an acute angle that a second line passing through said angular central point and said second tangent point makes with respect to said datum plane.

7. The sliding-type tripod-shaped constant-velocity universal joint as set forth in claim 6, wherein:
said first contact angle is 10 deg. or more; and
said second contact angle is smaller than said first contact angle.

8. The sliding-type tripod-shaped constant-velocity universal joint as set forth in claim 7, wherein:
said first contact angle is 14 deg. or more; and
a ratio between said first contact angle and said second contact angle is 1:0.5-0.85.

9. The sliding-type tripod-shaped constant-velocity universal joint as set forth in either one of claims 6-8, wherein:
when a range where said rollers and said roller grooves contact about said first tangent point as the center is defined as a first contact range; and
another range where said rollers and said roller grooves contact about said second tangent point as the center is defined as a second contact range;
said first contact range, and said second contact range are set up so as to be an independent elliptical configuration, respectively, so that they do not overlap each other.

10. The sliding-type tripod-shaped constant-velocity universal joint as set forth in either one of claims 6-9, wherein:
when a range where said rollers and said roller grooves contact about said first tangent point as the center is defined as a first contact range; and
another range where said rollers and said roller grooves contact about said second tangent point as the center is defined as a second contact range;
at least one of said first contact range and said second contact range is set up so as to be an independent elliptical configuration that is free from a deficient portion, which results from an end-surface part of said rollers.
